# EUROPEAN PATENT APPLICATION

(11) **EP 4 467 383 A1**
(43) Date of publication of application: **27.11.2024**
(21) Application number: 23382492.9
(22) Date of filing: 26.05.2023
(51) Int. Cl.: B60L 9/22, B60L 9/28, B60L 9/30, B60L 3/00

(54) **MULTI-CURRENT POWER SYSTEM FOR A RAILWAY VEHICLE**

(71) Applicant: Ingeteam Power Technology, S.A., 48170 Zamudio (Bizkaia) (ES)
(72) Inventor: LARRAZABAL BENGOECHEA, Igor, 48170 ZAMUDIO (ES); ORTEGA RODRIGUEZ, David, 48170 ZAMUDIO (ES)
(74) Representative: Igartua, Ismael

(57) **Abstract**

The invention relates to a power supply system for a railway vehicle, comprising a plurality of motor outputs; a first connection point (1.1) and a second connection point (1.2) for being connected to a catenary (300); and at least one power supply block (8) for each of two motors (200.1, 200.2, 200.3, 200.4) of the vehicle, said power supply block (8) comprising a first motor output and a second motor output. The power supply block (8) comprises a first line-side converter (4) and a second line-side converter (4) connected in cascade, a DC bus (3), a first load-side converter (6) connected between the DC bus (3) and the first motor output, and a second load-side converter (6) connected between the said DC bus (3) and the second motor output.

## Description

### TECHNICAL FIELD

The present invention relates to multi-current power supply systems configured to be arranged in a railway vehicle, whereby said railway vehicle can be electrically powered with different types of power supplies as required.

### PRIOR ART

Electric railway vehicles are powered by at least one three-phase electric motor which is fed from the electric power supplied by a catenary. The vehicle comprises a power supply system configured to be connected to the catenary and which converts the voltage from the catenary into the appropriate voltage for the motor.

Depending on the route to be travelled by a vehicle of this type, it may be confronted with catenaries of different voltages on different sections of the route. For this reason, some vehicles include power supply systems adapted to be able to connect to different types of catenaries (multi-current power supply systems).

On some sections the voltage may be of a certain value, on another section this value may be different. Even on different sections, the catenary may have different voltage types, i.e. the catenary may be direct current in some cases and alternating current in other cases: to connect to an alternating current catenary, the power supply system requires a traction transformer connectable to the catenary to convert the power supply to the catenary to the levels required for the vehicle; and to connect to a direct current catenary, however, this system does not require a traction transformer but an inductance. If necessary, it may be the case that a transformer can operate as an inductance by configuring the transformer in a particular way, so it is not uncommon for all or most power supply systems to comprise at least one transformer.

EP3019366A2 discloses a multi-current power supply system for railway vehicles. The power supply system is configured to electrically power a plurality of electric motors of the railway vehicle, and comprises a plurality of motor outputs, each motor output being configured to couple to one of the motors of the railway vehicle; a first connection point and a second connection point for connection to a catenary; a power selector configured to connect the first connection point or the second connection point to a catenary; and a transformer comprising a primary winding to which the first connection point is connected, and at least one secondary winding associated with each motor output, the second connection point being connected to the secondary windings of the transformer.

The power supply system disclosed in EP3019366A2 further comprises, for each motor output, a DC bus between a secondary winding of the transformer and the corresponding motor output; a converter block connected between said secondary winding of the transformer and said DC bus, and configured to transform the catenary voltage received through the transformer into a DC voltage for said DC bus; and an inverter connected between the DC bus and the corresponding system output, and configured to transform the DC bus voltage into a three-phase AC voltage for the motor coupled to said system output.

### DISCLOSURE OF THE INVENTION

The object of the invention is to provide a multi-current power supply system for a railway vehicle comprising at least two electric motors, as defined in the claims.

The power supply system is configured to be able to electrically supply the vehicle's motors from different power supply lines, and comprises a first connection point and a second connection point for connecting said power supply system to a catenary; a power supply selector configured to connect the first connection point or the second connection point to a catenary, the power supply system receiving the electrical supply from the catenary to which it is connected; a transformer comprising a primary winding to which the first connection point is connected, and two secondary windings for each of two vehicle motors; and at least one power supply unit connected to two secondary windings.

The power pack comprises a first motor output for coupling to a first motor, a second motor output for coupling to a second motor, a DC bus with two poles, a first load-side converter connected to the DC bus and to the first motor output and configured to transform a DC voltage from the DC bus to an AC voltage for powering the first motor, and a second load-side converter connected to the DC bus and to the second motor output and configured to transform a DC voltage from the DC bus to an AC voltage for powering the second motor, and a respective line-side converter connected to a corresponding secondary winding of the transformer and to the DC bus and comprising a first output terminal and a second output terminal.

A first pole of the DC bus is connected to the first output terminal of a first line-side converter, and a second pole of the DC bus is connected to the second output terminal of a second line-side converter. The second output terminal of the first line-side converter is connected to the first output terminal of the second line-side converter, such that the two line-side converters of the power system block are cascaded.

The cascade connection allows the power supply system to switch from being fed from an AC voltage catenary or power supply line to a DC voltage catenary or power supply line in a simple manner, since it is the cascade connection itself that provides an intermediate reference point for balancing the voltages.

Furthermore, by using a cascade topology in the line-side converters, such converters do not require, for example, the use of diodes and can be more compact, efficient and economical than in the case of using another common topology in this sector such as the NPC ("Neutral-Point Clamped") topology. By requiring fewer components, in addition to being able to reduce its size, the weight of the power supply system is also reduced, and therefore the weight of the railway vehicle comprising the power supply system, or the space provided could be used to include components to provide additional functions to the power supply system.

These and other advantages and features of the invention will become apparent in view of the figures and the detailed description of the invention.

### DESCRIPTION OF THE DRAWINGS

Figure 1 schematically shows an embodiment of the power supply system of the invention.
Figure 2 schematically shows the arrangement of the power supply system of figure 1, in a railway vehicle.
Figure 3 schematically shows a power supply block of the power supply system of figure 1.
Figure 4 schematically shows the topology of the line-side converters of a power supply block of the power system in Figure 1.
Figure 5 schematically shows a power supply unit of another embodiment of the power supply system of the invention, with a DC - DC converter for recharging a battery of the railway vehicle in which the power supply system is arranged.
Figure 6 schematically shows a topology of the DC-DC converter used to recharge batteries, of the power supply block in Figure 5.
Figure 7 schematically shows a power supply unit of another embodiment of the power supply system of the invention, with a configuration in which it raises the DC voltage of a DC catenary to which the power supply system is connected.
Figure 8 schematically shows the topology of one of the load-side converters of a power supply block of the power system in Figure 1.
Figure 9 shows the arrangement of fault selectors of the power supply system in Figure 1.

### DETAILED DISCLOSURE OF THE INVENTION

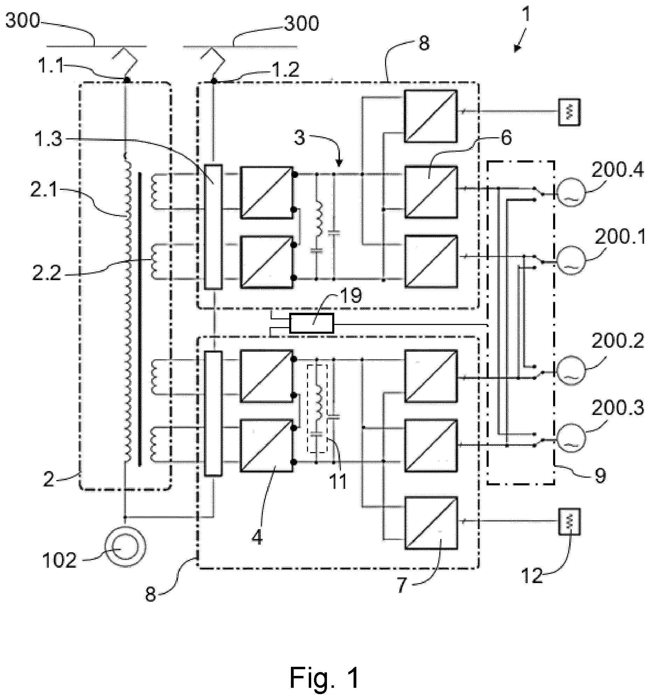

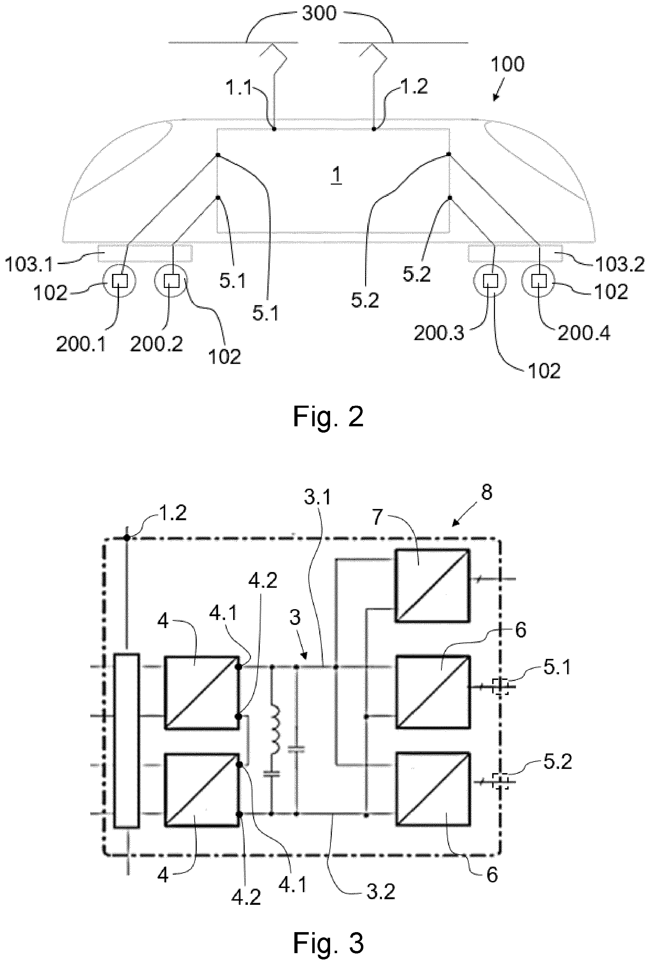

Figure 1 shows an embodiment of the proposed multi-current power supply system 1. The power supply system 1 is configured to be arranged on a railway vehicle 100, and to electrically power a plurality of electric motors 200.1 to 200.4 of said vehicle 100 depicted by way of example in figure 2.

The power supply system 1 comprises a first connection point 1.1 and a second connection point 1.2 for connecting said power supply system 1 to a catenary 300 (to a power line); a power selector 1.3 configured to connect one of the two connection points 1.1 or 1.2 to a catenary 300; a transformer 2 comprising a primary winding 2.1 to which the first connection point 1.1 is connected and two secondary windings 2.2 for each of two motors 200.1 and 200.4; 200.2 and 200.3; and at least one power supply block 8 connected to two secondary windings 2.2 and depicted in figure 3, for each of two motors 200.1 and 200.4; 200.2 and 200.3 of the vehicle 100, such that said power supply block 8 comprises a first motor output 5.1 for coupling to one motor 200.1; 200.2 and a second motor output 5.2 for coupling to another motor 200.3; 200.4.

The power supply block 8 further comprises a DC bus 3 with two poles 3.1 and 3.2, a first line-side converter 4 connected to a first secondary winding 2.2 of the transformer 2 and a second line-side converter 4 connected to a second secondary winding 2.2 of the transformer 2, said line-side converters 4 being preferably connected to the secondary windings 2.2 via the power supply selector 1.3, which in one position keeps said line-side converters 4 electrically connected to the secondary windings 2.2 through the power supply selector 1.3 so that said line-side converters 4 receive power through the first connection point 1.1 and which in another position disables this connection and electrically connects the line-side converters 4 to the second connection point 1.2. The power supply block 8 further comprises a first load-side converter 6 connected to its first motor output 5.1 and a second load-side converter 6 connected to its second motor output 5.2, each load-side converter 6 being connected to the DC bus 3 and configured to adapt a DC voltage from said DC bus 3 to an AC voltage for powering the corresponding motor 200.1 to 200.4.

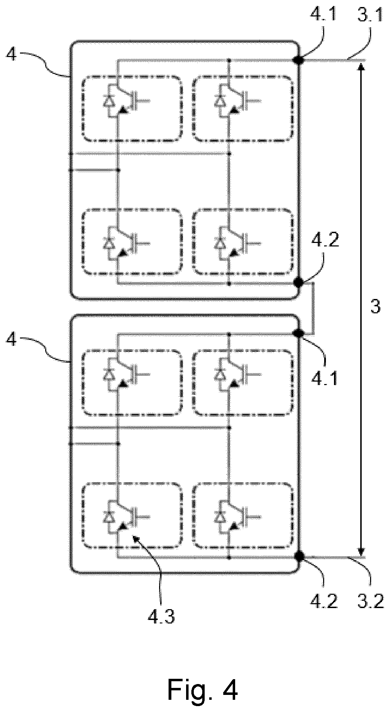

Each line-side converter 4 comprises a first output terminal 4.1 and a second output terminal 4.2. The second output terminal 4.2 of the first line-side converter 4 is connected to the first output terminal 4.1 of the second line-side converter 4, such that the line-side converters 4 of the power supply block 8 are cascaded, as depicted in more detail in Figure 4, requiring a smaller size compared to using converters of another topology common in this sector, such as NPC topology.

If required, the reduction in size obtained in comparison to the state of the art can be used to incorporate additional functions in the power supply system 1 without increasing the size compared to using a standard topology such as the NPC, for example, as detailed below.

Each line-side converter 4 is a full bridge converter (H-bridge), and this together with the fact of using a cascaded topology to link two line-side converters 4 allows or facilitates connecting to the DC bus 3 additional elements or devices that provide additional functionalities to the power system 1 (mainly due to the absence of diodes in contrast to what happens in the NPC topology).

The additional elements or devices may comprise a braking chopper 7 (see figure 1) for example. Thanks to the braking chopper 7 the energy generated during braking of the vehicle 100 can be dissipated by a heatsink 12 (see figure 1).

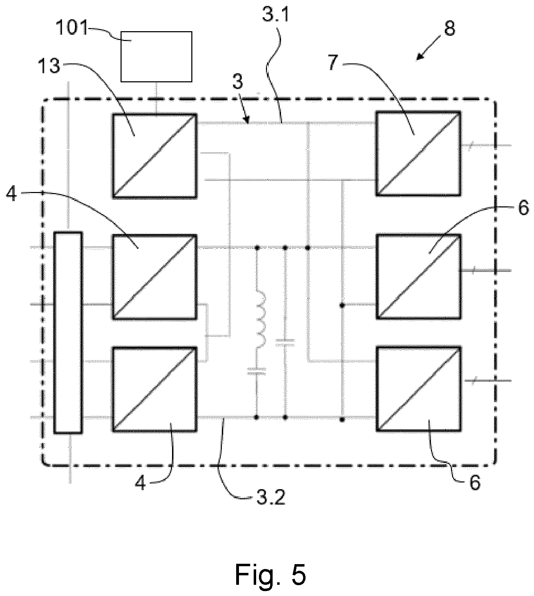

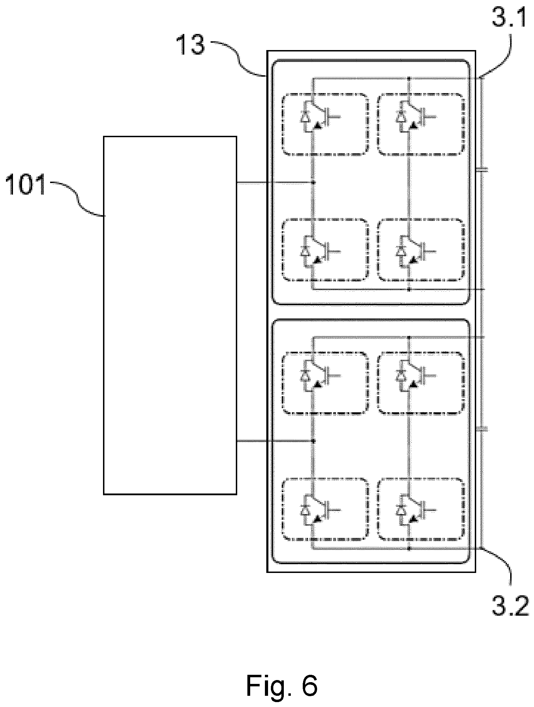

Additional elements or devices may provide, alternatively or in conjunction with the braking chopper 7, an additional function to recharge a battery 101 of the vehicle 100 from such energy generated during braking, for example. In one embodiment of the power supply system 1, the power supply block 8 comprises a DC - DC converter 13 to provide this additional function, and said DC - DC converter 13 is connected between the first line-side converter 4 and the battery 101 (as shown in figure 5). The DC - DC converter 13 may have a conventional or any required configuration, but thanks to the cascading of the two line-side converters 4, the DC - DC converter 13 may comprise a configuration analogous to such a cascaded assembly, as shown in figure 6.

In some embodiments, the additional elements or devices may include a DC/DC converter connected to DC bus 3 and not shown in the figures, to power the auxiliary loads of the vehicle 100.

As a general rule, the different catenaries 300 to which the power supply system 1 has to cope with and be able to connect comprise AC voltage catenaries 300 and also DC voltage catenaries 300 with different voltage values. In both cases, the catenaries 300 may comprise different voltage values, and the power supply system 1 has to be adapted to adapt to the different possible voltages it has to cope with.

In the case of the AC voltage catenary 300, the power supply system 1 comprises a transformer 2 which has already been mentioned and by means of which the power supply system 1 is adapted to operate with AC voltages of different values.

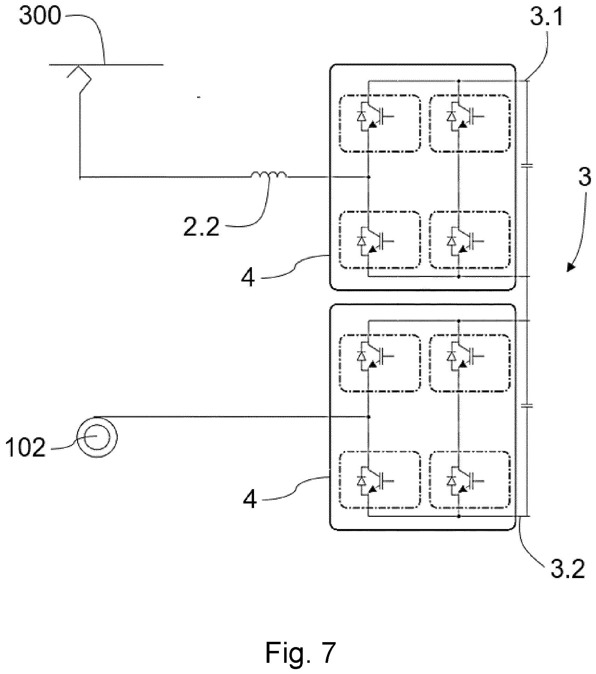

In the case of DC catenary 300, the problem may arise when the voltage of the DC catenary 300 is at the lower end of the possible voltage range. In this case, it is necessary to raise the voltage of the catenary 300 to supply the motors 200.1 to 200.4, in order to obtain a DC bus 3 suitable for supplying the corresponding load-side converters 6. With the power supply system 1 of the invention, thanks to the cascade connection of the line-side converters 4, the voltage can be easily raised, since it simply requires a certain configuration of the power supply selector 1.3 which allows, for example, the catenary 300 to be connected through one of the secondary windings 2.2 associated with the power supply block 8, as shown in figure 7 as an example.

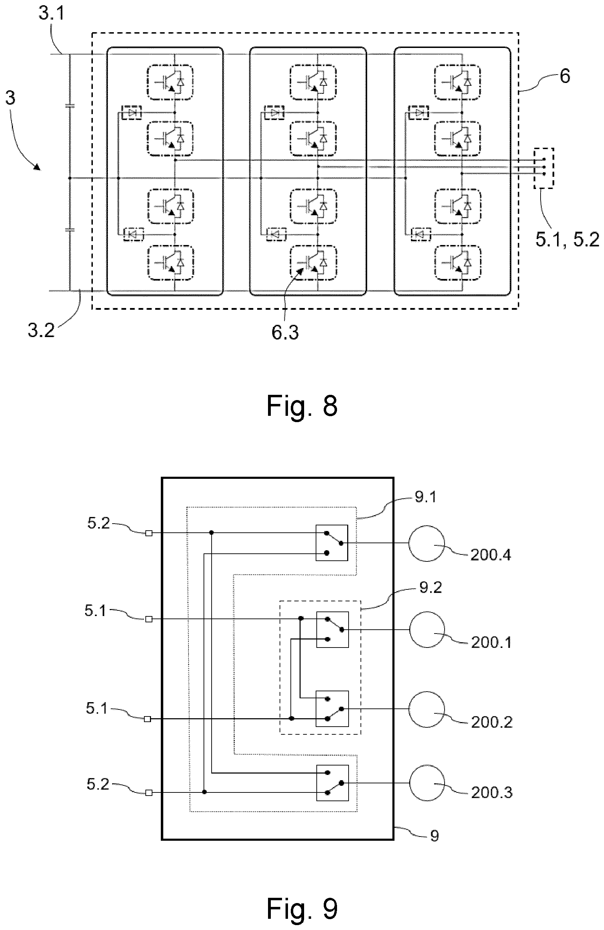

Preferably, each load-side converter 6 comprises a NPC ("Neutral-Point Clamped") topology, as shown as an example in figure 8, of at least three levels, and are connected in parallel on the DC side (on the side that they are connected to the DC bus 3). In this way, the power supply system 1 retains the advantages described by cascading the line-side converters 4, but achieves high voltage conversion efficiency for each of the motor outputs 5.1 and 5.2 because each load-side converter 6 is a multilevel converter.

Preferably each line-side converter 4 and/or each load-side converter 6 comprise a plurality of controllable switches 4.3 and 6.3 (which may be, for example, IGBTs). The power system 1 comprises a control device 19 configured to control said controllable switches 4.3 and 6.3. Said control device 19 may further be in communication with the power selector 1.3 and configured to cause a change of position of said power selector 1.3, although the change of position of said power selector 1.3 could also, or alternatively, be done manually.

The power supply block 8 further comprises a DC bus 3 with a first pole 3.1 connected to the first output terminal 4.1 of the first line-side converter 4 and a second pole 3.2 connected to the second output terminal 4.2 of the second line-side converter 4. Each load side converter 6 of said power supply block 8 is connected to both poles 3.1 and 3.2 of said DC bus 3 and configured to convert a voltage of said DC bus 3 into an AC voltage for the motor 200.1 to 200.4 coupled to the corresponding motor output 5.1, 5.2.

Preferably, the power supply block 8 comprises a filtering branch 11 connected between the first pole 3.1 and the second pole 3.2 of the DC bus 3, said filtering branch 11 comprising a coil and a capacitor connected in series. The filtering branch 11 is configured to be able to remove the ripple or part of the ripple from the voltage on the DC bus 3.

In some embodiments of the power supply system 1 not shown in the figures, the power supply block 8 comprises a block fault selector arranged between its first motor output 5.1 and its second motor output 5.2, and detecting means for being able to detect a fault in the load-side converters 6 of said power supply block 8, said means being communicated with the control device 19. A load-side converter 6 may fail for various reasons (higher than desired temperature, breakage of one of the controllable switches 6.3, etc.), and said detecting means are adapted to detect variables that may be indicative of a fault, such as temperature, electrical current and/or electrical voltage, for example. The control device 19 receives these detections and determines based thereon whether or not there is a fault in one of the load-side converters 6, generating a control signal dependent on such determination to control the state of the block fault selector. Thus, if the control device 19 detects a fault in one of the load-side converters 6, it controls the state of the block fault selector so that said block fault selector causes the two motor outputs 5.1 and 5.2 to be connected to the load-side converter 6 which continues to operate correctly, with both motors 200.1 and 200.4; 200.2 and 200.3 remaining powered, albeit with reduced power, thus allowing the vehicle 100 to maintain adherence to the tracks despite the total power reduction.

Preferably, in cases where a power supply block 8 comprises a block fault selector, said power supply block 8 is configured to be able to supply more power than the rated power required for each of the two motors 200.1 and 200.4; 200.2 and 200.3 coupled to its two motor outputs 5.1 and 5.2, such that upon fault of one power supply block 8, the total power supplied to the four motors 200 (thanks to the block fault selector) is more than half.

Preferably the power supply system 1 comprises at least a first power supply block 8 and a second power supply block 8, such that it is adapted to supply at least four motors 200.1 to 200.4 (two per power supply block 8). In this case the transformer 2 comprises two secondary windings 2.2 connected to the first power supply block 8 and two secondary windings 2.2 connected to the second power supply block 8. The vehicle 100 comprises four drive axles, each one comprising a plurality of wheels 102, and a respective motor 200.1 to 200.4 to drive each of the four drive axles and cause movement of the wheels 102. With two power supply blocks 8 there are four motor outputs 5.1 and 5.2, each motor output 5.1 and 5.2 being configured to be coupled to a respective motor 200.1 to 200.4. A first drive axle and a second drive axle are attached to a first bogie 103.1 of the vehicle 100 (see figure 2), and a third drive axle and a fourth drive axle are attached to a second bogie 103.2 of the vehicle 100. In the arrangement shown in figure 2, the motors 200.1 and 200.2 are associated with the first bogie 103.1 and the motors 200.3 and 200.2 are associated with the second bogie 103.2. Depending on the direction of travel of the vehicle 100, the drive axles attached to the first bogie 103.1 are front drive axles and the drive axles attached to the second bogie 103.2 are rear drive axles of the vehicle 100, or vice versa.

In the power supply system 1, preferably, each motor output 5.1 and 5.2 is not configured to couple to any motors 200.1 and 200.4, but are configured to couple to said motors 200.1 and 200.4 according to the arrangement of said motors 200.1 to 200.4 in said vehicle 100. For the arrangement shown in Figure 2, the first motor outputs 5.1 are configured to be coupled to the motors 200.1 and 200.2 associated with the first bogie 103.1 and the second motor outputs 5.2 are configured to be coupled to the motors 200.3 and 200.4 associated with the second bogie 103.2.

When the power supply system 1 comprises a plurality of power supply blocks 8, as in the case where it comprises a first power supply block 8 and a second power supply block 8, said power supply system 1 may comprise a selector 9 with a first fault selector 9.1 of two positions and a second fault selector 9.2 of two positions, identified in figure 9, which are connected between the two power supply blocks 8, said fault selector 9.1 and said fault selector 9.2 being configured to, in a given position (in a closed position or in a closed state according to the embodiment of the figures), electrically connect said two power supply blocks 8. In these embodiments, the power supply system 1 may further comprise a block fault selector as previously described between the two motor outputs 5.1 and 5.2 of each power supply block 8, plus fault selectors 9.1 and 9.2, or may dispense with said block fault selectors.

The use of fault selectors 9.1 and 9.2 allows the motors of a power supply block 8 to continue to be electrically powered even when their power supply block 8 has a fault and does not work or does not work properly. In such cases, although the other power supply block 8 has to divide its power supply between more motors 200.1 to 200.4 (its own motors and those of the failed power supply block 8), the fact that all motors 200.1 to 200.4 are powered allows to continue operating the vehicle 100 in a safer way despite the fault, at least because the traction of the vehicle 100 is improved and a homogenised traction is maintained.

Preferably, in addition, where the power supply system 1 comprises fault selectors 9.1 and 9.2, each power supply block 8 is configured to be able to supply power in excess of the rated power required for each of the two motors 200.1 and 200.4; 200.2 and 200.3 coupled to their two motor outputs 5.1 and 5.2, such that upon fault of one power supply block 8, the total power supplied to the four motors 200.1 to 200.4 (due to the fault selectors 9.1 and 9.2) is more than half.

According to the arrangement of motors 200.1 to 200.4 shown in Figure 2, the first fault selector 9.1 is connected between the second motor output 5.2 of the first power supply block 8 and the second motor output 5.2 of the second power supply block 8, and the second fault selector 9.2 is connected between the first motor output 5.1 of the first power supply block 8 and the first motor output 5.1 of the second power supply block 8.

The fault selectors 9.1 and 9.2 are arranged so that, when they are closed (according to the embodiment of the figures) by a fault in one of the power supply blocks 8, the second fault selector 9.2 electrically connects the two motors 200.1 and 200.2 of the first bogie 103.1, and the first fault selector 9.1 electrically connects the two motors 200.3 and 200.4 of the second bogie 103.2 when closed. This causes motors 200.1 and 200.2 to be connected to the same converter on load side 6 and motors 200.3 and 200.4 to be connected to the same converter on load side 6 (and different from the one to which motors 200.1 and 200.2 corresponding to the most forward drive axles are connected). This allows traction to be maintained on all drive axles (and thus on all wheels 102), despite the fault of one of the power supply blocks 8, i.e. the wheels 102 of all drive axles are kept driven even in fault mode, efficiency is maintained and high forces can be maintained accordingly.

In addition, the incorporation of the fault selectors 9.1 and 9.2 may allow energy savings, since during the operation of the vehicle 100 and at times when the journey being made by the vehicle 100 allows it, one of the power supply blocks 8 may be deactivated or disconnected actuating over fault selectors 9.1 and 9.2, so that the other power supply block 8 is responsible for powering the four motors 200.1 and 200.4 (the two motors 200.1 and 200.4; 200.2 and 200.3 associated under normal conditions with the deactivated power supply block 8).

In some embodiments where the power system 1 comprises a first fault selector 9.1 and a second fault selector 9.2, said fault selectors 9.1 and 9.2 form a selector assembly, said first fault selector 9.1 and said second fault selector 9.2 being configured to change position simultaneously and to be in the same position. Preferably the selector assembly is automatically controllable by the control device 19 of the power supply system 1, said control device 19 being configured to transmit a control signal to said selector assembly and to cause a change of position of the fault selectors 9.1 and 9.2 of said selector assembly with said control signal.

A power supply block 8 can fail for different reasons, such as the fault of one of its controllable switches 4.3 or 6.3, the fault of the power supply to the power supply unit, an undesired increase in temperature, etc. The power supply system 1 is adapted to be able to detect a fault in the power supply block 8 by detecting an anomaly in the temperature of some of its components, in the electrical current through some of its components or in the electrical voltage at some point of said power supply block 8, to give some examples. The control device 19, or other control unit of the power supply system 1, may determine the presence of a fault, and generates a control signal dependent on such determination, to control the fault selectors 9.1 and 9.2. In the absence of a fault, the generated control signal maintains the fault selectors 9.1 and 9.2 in a position to allow each power supply block 8 to generate the required power supply for the motors 200.1 to 200.4 connected to its two motor outputs 5.1 and 5.2, from the voltage of the corresponding catenary 300; when a fault is determined, such control signal causes a change of position of the fault selectors 9.1 and 9.2 so that the said fault selectors 9.1 and 9.2 can be controlled in such a way that said fault selectors 9.1 and 9.2 can be controlled by the control signal so that said fault selectors 9.1 and 9.2 electrically connect the two motor outputs 5.1 and 5.2 of one power supply block 8 to the motor outputs 5.1 and 5.2 of the other power supply block 8, so that the four motors 200.1 and 200.4 remain powered (with the power supply provided by one and the same power supply block 8, the one without fault). The power supply system 1 may comprise detecting means configured to detect variables by which a fault may be determined, such as temperature, electrical current and/or electrical voltage, and such detecting means are communicated with the control device 19 (or other control unit) so as to be able to determine the presence of a fault based on the detections received from the detecting means.

In some embodiments, the state of the two fault selectors 9.1 and 9.2 are controlled by the same control signal. In other embodiments, the state of each fault selector 9.1 and 9.2 is controlled by a respective control signal.

## Claims

1. Multi-current power supply system for a railway vehicle comprising at least two electric motors (200.1, 200.2, 200.3, 200.4), the power supply system (1) comprising a first connection point (1.1) and a second connection point (1.2) for being connected to a catenary (300); a power selector (1.3) configured to connect one of the connection points (1.1, 1.2) to the catenary (300); a transformer (2) comprising a primary winding (2.1) to which the first connection point (1.1), and two secondary windings (2.2) for each of two motors (200.1, 200.2, 200.3, 200.4) of the vehicle (100); and at least one power supply block (8) connected to two secondary windings (2.2) of the transformer (2), the power supply block (8) comprising a first motor output (5.1) for coupling to a first motor (200.1; 200.2), a second motor output (5.2) for coupling to a second motor (200.3; 200.4), a DC bus (3) with two poles (3.1, 3.2), a first load-side converter (6) connected to the DC bus (3) and to the first motor output (5.1) and configured to transform a DC voltage from the DC bus (3) to an AC voltage to supply the first motor (200.1; 200.2), a second load-side converter (6) connected to the DC bus (3) and to the second motor output (5.2) and configured to transform a DC voltage from the DC bus (3) to an AC voltage to supply the second motor (200.3; 200.4), and a respective line-side converter (4) connected to a corresponding secondary winding (2.2) of the transformer (2) and to the DC bus (3) and comprising a first output terminal (4.1) and a second output terminal (4.2), **characterised in that** a first pole (3.1) of the DC bus (3) is connected to the first output terminal (4.1) of a first line-side converter (4), a second pole (3.2) of the said DC bus (3) is connected to the second output terminal (4.2) of a second line-side converter (4), and the second output terminal (4.2) of the first line-side converter (4) is connected to the first output terminal (4.1) of the second line-side converter (4), so that the two line-side converters (4) of the power supply block (8) are cascaded.

2. Multi-current power supply system according to claim 1, wherein each line-side converter (4) is a full-bridge converter.

3. Multi-current power supply system according to claim 1 or 2, comprising at least a first power supply block (8) and a second power supply block (8), and the transformer (2) comprises two secondary windings (2.2) connected to the first power supply block (8) and two secondary windings (2.2) connected to the second power supply block (8), the power supply system (1) further comprising a first two-position fault selector (9.1) connected between the first motor output (5.1) of the first power supply block (8) and a motor output (5.1, 5.2) of the second power supply block (8); a second two-position fault selector (9.2) connected between the second motor output (5.2) of the first power supply block (8) and the other motor output (5.1, 5.2) of the second power supply block (8); and a control device (19) communicated with the first fault selector (9.1) and the second fault selector (9.2), wherein the first fault selector (9.1) is configured to electrically connect the first motor output (5.1) of the first power supply block (8) to the corresponding motor output (5.1, 5.2) of the second power supply block (8) in a given position and the second fault selector (9.2) being configured to electrically connect the second motor output (5.2) of the first power supply block (8) to the other motor output (5.1, 5.2) of the second power supply block (8) in a given position.

4. Multi-current power supply system according to claim 3, wherein the first fault selector (9.1) and the second fault selector (9.2) form a selector assembly, said first fault selector (9.1) and said second fault selector (9.2) being configured to change position simultaneously and to be in the same position.

5. Multi-current power supply system according to claim 3 or 4, wherein the state of the first fault selector (9.1) and the state of the second fault selector (9.2) are controllable by the control device (19), the control device (19) being configured to control the change of position of said first fault selector (9.1) and said second fault selector (9.2).

6. Multi-current power supply system according to claim 5, wherein the control device (19) is configured to determine a fault in the first power supply block (8) and in the second power supply block (8), and to generate at least one control signal dependent on such determination, the state of the fault selectors (9.1, 9.2) being controlled by such control signal.

7. Multi-current power supply system according to any of claims 3 to 6, wherein the vehicle (100) comprises a first bogie (103.1) with two drive axles and a motor (200.1, 200.3) associated with each of said drive axles, a second bogie (103.2) with two drive axles and a motor (200.2, 200.4) associated with each of said drive axles, each power supply block (8) being configured for powering a motor (200.1, 200.2, 200.3, 200.4) of each bogie (103.1, 103.2), the first fault selector (9.1) electrically connecting the motors (200.3, 200.4) of the second bogie (103.2) in a position and the second fault selector (9.2) electrically connecting the motors (200.1, 200.2) of the first bogie (103.1) in a position.

8. Multi-current power supply system according to any of claims 3 to 7, wherein the power supply block (8) is configured to be able to supply power in excess of the rated power required for each of the two motors (200.1, 200.2; 200.3, 200.4).

9. Multi-current power supply system according to any of claims 3 to 8, wherein the power supply block (8) comprises a two-position block fault selector between the first motor output (5.1) and the second motor output (5.2), said block fault selector being configured to electrically connect said first motor output (5.1) and said second motor output (5.2) in a given position.

10. Multi-current power supply system according to claim 9, wherein the state of the block fault selector is controllable by the control device (19), the control device (19) being configured to control the change of position of said block fault selector.

11. Multi-current power supply system according to claim 10, wherein the control device (19) is configured to determine the fault in the power supply block (8) and to generate at least one control signal dependent on such determination, the state of the block fault selector being controlled by such control signal.

12. Multi-current power supply system according to any of claims 1 to 11, wherein the power supply block (8) comprises a filtering branch (11) connected between the first pole (3.1) and the second pole (3.2) of the DC bus (3), said filter branch (11) comprising a coil and a capacitor connected in series.

13. Multi-current power supply system according to any of claims 1 to 12, wherein each load-side converter (6) of a power supply block (8) comprises an NPC topology.

14. Multi-current power supply system according to any of claims 1 to 13, wherein each line-side converter (4) comprises a plurality of controllable switches (4.3) and wherein each load-side converter (6) comprises a plurality of controllable switches (6.3).

15. Railway vehicle comprising a plurality of motors (200.1, 200.2, 200.3, 200.4) and a power supply system (1) for electrically powering said motors (200.1, 200.2, 200.3, 200.4), **characterised in that** the power supply system (1) is a power supply system according to any one of the preceding claims.

## Amended claims

### Amended claims in accordance with Rule 137(2) EPC.

1. Multi-current power supply system for a railway vehicle comprising at least two electric motors (200.1, 200.2, 200.3, 200.4), the power supply system (1) comprising a first connection point (1.1) and a second connection point (1.2) for being connected to a catenary (300); a power selector (1.3) configured to connect any one of the connection points (1.1, 1.2) to the catenary (300); a transformer (2) comprising a primary winding (2.1) to which the first connection point (1.1), and two secondary windings (2.2) for each of two motors (200.1, 200.2, 200.3, 200.4) of the vehicle (100); and at least one power supply block (8) connected to two secondary windings (2.2) of the transformer (2), the power supply block (8) comprising a first motor output (5.1) for coupling to a first motor (200.1; 200.2), a second motor output (5.2) for coupling to a second motor (200.3; 200.4), a DC bus (3) with two poles (3.1, 3.2), a first load-side converter (6) connected to the DC bus (3) and to the first motor output (5.1) and configured to transform a DC voltage from the DC bus (3) to an AC voltage to supply the first motor (200.1; 200.2), a second load-side converter (6) connected to the DC bus (3) and to the second motor output (5.2) and configured to transform a DC voltage from the DC bus (3) to an AC voltage to supply the second motor (200.3; 200.4), and a first line-side converter (4) connected to a corresponding secondary winding (2.2) of the transformer (2) and to the DC bus (3) and a second line-side converter (4) connected to a corresponding secondary winding (2.2) of the transformer (2) and to the DC bus (3), each of said two line-side converters (4) comprising a first output terminal (4.1) and a second output terminal (4.2), a first pole (3.1) of the DC bus (3) being connected to the first output terminal (4.1) of a first line-side converter (4), a second pole (3.2) of the said DC bus (3) being connected to the second output terminal (4.2) of a second line-side converter (4), and the second output terminal (4.2) of the first line-side converter (4) being connected to the first output terminal (4.1) of the second line-side converter (4), so that the two line-side converters (4) of the power supply block (8) are cascaded, **characterised in that** the power supply system (1) comprises at least a first power supply block (8) and a second power supply block (8), the transformer (2) comprising two secondary windings (2.2) connected to the first power supply block (8) and two secondary windings (2.2) connected to the second power supply block (8), the power supply system (1) further comprising a first two-position fault selector (9.1) connected between the first motor output (5.1) of the first power supply block (8) and a motor output (5.1, 5.2) of the second power supply block (8); a second two-position fault selector (9.2) connected between the second motor output (5.2) of the first power supply block (8) and the other motor output (5.1, 5.2) of the second power supply block (8); and a control device (19) communicated with the first fault selector (9.1) and the second fault selector (9.2), wherein the first fault selector (9.1) is configured to electrically connect the first motor output (5.1) of the first power supply block (8) to the corresponding motor output (5.1, 5.2) of the second power supply block (8) in a given position and the second fault selector (9.2) being configured to electrically connect the second motor output (5.2) of the first power supply block (8) to the other motor output (5.1, 5.2) of the second power supply block (8) in a given position.

2. Multi-current power supply system according to claim 1, wherein each line-side converter (4) is a full-bridge converter.

3. Multi-current power supply system according to claim 2, wherein the first fault selector (9.1) and the second fault selector (9.2) form a selector assembly, said first fault selector (9.1) and said second fault selector (9.2) being configured to change position simultaneously and to be in the same position.

4. Multi-current power supply system according to any of claims 1 to 2, wherein the state of the first fault selector (9.1) and the state of the second fault selector (9.2) are controllable by the control device (19), the control device (19) being configured to control the change of position of said first fault selector (9.1) and said second fault selector (9.2).

5. Multi-current power supply system according to claim 4, wherein the control device (19) is configured to determine a fault in the first power supply block (8) and in the second power supply block (8), and to generate at least one control signal dependent on such determination, the state of the fault selectors (9.1, 9.2) being controlled by such control signal.

6. Multi-current power supply system according to any of claims 1 to 5, wherein the vehicle (100) comprises a first bogie (103.1) with two drive axles and a motor (200.1, 200.3) associated with each of said drive axles, a second bogie (103.2) with two drive axles and a motor (200.2, 200.4) associated with each of said drive axles, each power supply block (8) being configured for powering a motor (200.1, 200.2, 200.3, 200.4) of each bogie (103.1, 103.2), the first fault selector (9.1) electrically connecting the motors (200.3, 200.4) of the second bogie (103.2) in a position and the second fault selector (9.2) electrically connecting the motors (200.1, 200.2) of the first bogie (103.1) in a position.

7. Multi-current power supply system according to any of claims 1 to 6, wherein the power supply block (8) is configured to be able to supply power in excess of the rated power required for each of the two motors (200.1, 200.2; 200.3, 200.4).

8. Multi-current power supply system according to any of claims 1 to 7, wherein the power supply block (8) comprises a two-position block fault selector between the first motor output (5.1) and the second motor output (5.2), said block fault selector being configured to electrically connect said first motor output (5.1) and said second motor output (5.2) in a given position.

9. Multi-current power supply system according to claim 8, wherein the state of the block fault selector is controllable by the control device (19), the control device (19) being configured to control the change of position of said block fault selector.

10. Multi-current power supply system according to claim 9, wherein the control device (19) is configured to determine the fault in the power supply block (8) and to generate at least one control signal dependent on such determination, the state of the block fault selector being controlled by such control signal.

11. Multi-current power supply system according to any of claims 1 to 10, wherein the power supply block (8) comprises a filtering branch (11) connected between the first pole (3.1) and the second pole (3.2) of the DC bus (3), said filter branch (11) comprising a coil and a capacitor connected in series.

12. Multi-current power supply system according to any of claims 1 to 11, wherein each load-side converter (6) of a power supply block (8) comprises an NPC topology.

13. Multi-current power supply system according to any of claims 1 to 12, wherein each line-side converter (4) comprises a plurality of controllable switches (4.3) and wherein each load-side converter (6) comprises a plurality of controllable switches (6.3).

14. Railway vehicle comprising a plurality of motors (200.1, 200.2, 200.3, 200.4) and a power supply system (1) for electrically powering said motors (200.1, 200.2, 200.3, 200.4), **characterised in that** the power supply system (1) is a power supply system according to any one of the preceding claims.
